# EUROPEAN PATENT APPLICATION

(11) **EP 1 596 099 A1**
(43) Date of publication of application: **16.11.2005**
(21) Application number: 05252936.9
(22) Date of filing: 12.05.2005
(51) Int. Cl.: F16H 25/20, B23Q 5/56, B23Q 5/40

(54) **Lead screw nut for avoiding play and actuating device having the same**

(30) Priority: 14.05.2004 JP 2004145397
(71) Applicant: Yugen Kaisha Hama International, Okaya-shi Nagano 394-0034 (JP)
(72) Inventor: Hama, Tomio, c/o Yugen Kaisha Hama International, Okaya-shi Nagano 394-0034 (JP)
(74) Representative: Gill, Stephen Charles

(57) **Abstract**

The moving body (4) of an actuating device (A) is capable of automatically and rapidly eliminating clearances between nuts (6, 8) and a leadscrew (2). The moving body (4) comprises: a first nut (6) screwed with the leadscrew (2); a second nut (8) screwed with the leadscrew (2) and engaged with the first nut (6), the second nut (8) being capable of relatively moving to and away from the first nut (6); a wedge member (18) provided between the first nut (6) and the second nut (8); and a biasing member (22) biasing the wedge member (18) so as to increase a distance between the first nut (6) and the second nut (8). The first nut (6) and the second nut (8) are pressed onto the leadscrew (2) by increasing the distance between the first nut (6) and the second nut (8) with the wedge member (18).

## Description

### BACKGROUND OF THE INVENTION

The present invention relates to a moving body, which is screwable to and movable on a leadscrew, and an actuating device having the moving body.

A conventional leadscrew type actuating device comprises: a leadscrew having an outer circumferential face, on which a lead section is formed; a nut being screwed with the leads section of the leadscrew; and a moving body being linearly reciprocally moved along the leadscrew with rotation of the leadscrew. The leadscrew is rotated by a driving unit, e.g., motor.

In the actuating device, play or jolt occurs in clearances between the leadscrew and the nut. Thus, many mechanisms have been proposed to prevent the play or jolt.

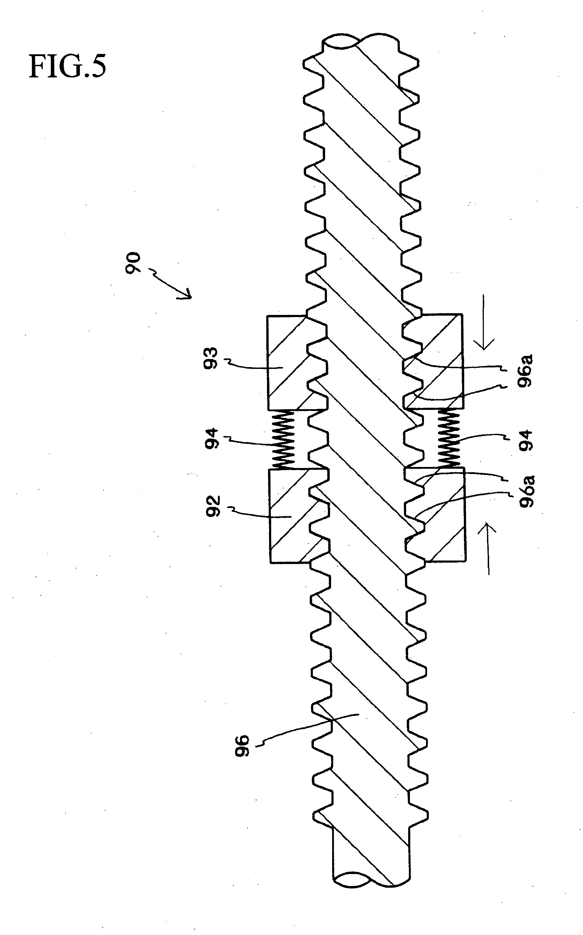

For example, as shown in Fig. 5, a pair of nuts 92 and 93 are provided to a moving body 90, and biasing members 94, e.g., compression springs, are elastically provided between the nuts 92 and 93. The nuts 92 and 93 are biased to move away each other by the elasticity of the biasing members 94. By the elasticity, the nuts 92 and 93 are pressed onto side faces 96a of threads of a leadscrew 96, so that play or jolt can be restricted.

However, in the conventional actuating device shown in Fig. 5, if an external force, which is greater than the elasticity of the biasing members 94, biases the nuts 92 and 93 to move close each other (in a directions of an arrows shown in Fig. 5), the biasing members 94 are deformed. By deforming the biasing members 94, clearances are formed between the nuts 92 and 93 and the side faces 96a of the leadscrews 96, so that play or jolt of the moving body 90 occurs.

To solve the problem, the biasing members 94 having great elasticity, which are greater than an estimated maximum external force applied to the moving body 90 or the nuts 92 and 93, are employed. However, frictional resistances between the nuts 92 and 93 and the leadscrew 96 must be great, so that a high power driving unit, which rotates the leadscrew 96, is required. Further, the biasing members 94 having great elasticity must are large and expensive, so that the actuating device must be large and manufacturing cost must be increased.

In another conventional actuating device having a leadscrew, spherical bodies, whose diameters are larger than clearances between nuts and the leadscrew, are provided between the nuts and the leadscrew so as to press the nuts onto the leadscrew. Further, pitches of the nuts are made different from that of the leadscrew so as to press the nuts onto the leadscrew. These methods are capable of restraining to form the clearances between the nuts and the leadscrew. However, frictional resistances between the nuts and the leadscrew must be further greater, so that a high power driving unit is required. Further, as the leadscrew, the nuts and the spherical bodies are abraded, the clearances are easily formed, so that maintenance cost must be increased.

A conventional leadscrew type actuating device, whose leadscrew can be rotated by a small power driving unit and in which clearances between nuts and the leadscrew can be automatically eliminated, is disclosed in a web page of " Kerk Leadscrew (page 4)"/ Fukuda Koeki Co. Ltd./ searched on October 30, 2003/ URL http://www.fukudaco.co.jp/item/pdf/h1.pdf.

A moving body of the actuating device comprises: a pair of nuts being screwed with the leadscrew; a cylindrical member, which bridges over the nuts and whose one end is fixed to one of the nuts; and a spacer, which is screwed with a screw section formed on an outer circumferential face of the cylindrical member and whose one end contacts the other nut. With this structure, the nuts are moved away each other by rotating the spacer. The spacer is biased to turn by elasticity of a spring so as to always press the nut.

When clearances are formed between the nuts and the leadscrew, the spacer is turned to move the nuts away each other, so that the clearances can be eliminated. Since a screw section of the spacer has fine pitch, even if a great external force is applied to the nuts, the spacer is not turned in the reverse direction. Therefore, the spacer never moves the nuts close each other, and no clearances are formed between the nuts and the leadscrew. The spring is provided to only turn the spacer. The clearances between the nuts and the leadscrew can be eliminated without pressing the nuts onto the leadscrew. Therefore, the leadscrew can be rotated by small power or torque.

However, the actuating device disclosed in the web page has following problems.

Firstly, the moving body includes the cylindrical member, the spacer, the screw sections of the cylindrical member and the spacer and the spring for turning the spacer. Namely, the moving body has a complex structure, so that the actuating device must be large and manufacturing cost must be high.

Secondly, the spacer is screwed with the cylindrical member and contacts the other nut, so rotational friction therebeween must be great. Therefore, the spacer is slow to turn, and it cannot sufficiently respond to rapid reduction of the pressing force and forming the clearances. If the nuts are pressed onto the leadscrw with the small pressing force or the clearances are formed between the nuts and the leadscrew, the moving body is moved with play or jolt.

### SUMMARY OF THE INVENTION

The present invention has been invented to address the problems of the conventional actuating devices.

An object of the present invention is to provide a low cost moving body of an actuating device, in which clearances between nuts and a leadscrew can be automatically and rapidly eliminate with a simple structure.

Another object of the present invention is provide an actuating device having said moving body.

To seek to achieve the objects, in a first aspect the present invention has following structures.

Namely, the moving body of an actuating device having a leadscrew comprises:
a first nut being screwable to a screw section of the leadscrew, in use the first nut being prohibited to rotate on the leadscrew (e.g. being rotatably fixed or stationary when the leadscrew rotates) but allowed to move in the axial direction of the leadscrew;
a second nut being screwable to the screw section of the leadscrew and engaged with the first nut, in use the second nut being prohibited to rotate on the leadscrew (e.g. being rotatably fixed or stationary when the leadscrew rotates) but allowed to move in the axial direction of the leadscrew, the second nut being capable of relatively moving to and away from the first nut;
a wedge member being provided between the first nut and the second nut; and
a biasing member biasing the wedge member in a biasing direction so as to increase a distance between the first nut and the second nut,
whereby the first nut and the second nut are pressed onto the leadscrew by increasing the distance between the first nut and the second nut with the wedge member.

In the moving body, a distance between contact faces of the first nut and second nut, which contact the wedge member, may be gradually reduced in the biasing direction of the biasing member, and
the distance between the first nut and second nut may be increased by moving the wedge member, which contact the contact faces, in the biasing direction.

In the moving body, a width of the wedge member may be gradually reduced toward a front end or in the biasing direction.

In the above described moving body, when the force pressing the nuts onto the leadscrew is reduced and clearances are formed between the nuts and the leadscrew, the wedge member is moved by the elasticity of the biasing member so as to increase and maintain the distance between the nuts, so that the pressing force can be maintained and the clearances can be eliminated Unlike the conventional moving body having the turnable spacer, the moving body has a simple structure, its manufacturing cost can be reduced, and the distance between the nuts can be rapidly and smoothly increased without frictional resistance.

Further, in the moving body, the wedge member may be biased from outer faces of the first and second nuts toward inner faces thereof. With this structure, the simple and compact moving body can be realized.

In the moving body, a plurality of the wedge members may be radially arranged with respect to an axial line of the first and second nuts. With this structure, an external force working to the nuts can be received by the wedge members, which are radially arranged, and the distance between the nuts can be maintained by the wedge members, so that no excessive force works to the nuts and the moving body can be moved stably.

The moving body may further comprise a holding member being provided to at least one of the nuts, and
the biasing member may be elastically held between the wedge member and the holding member.

In the moving body, the holding member may be a cylindrical member covering outer circumferential faces of the first and second nuts. With this structure, the simple and compact moving body can be realized.

In the moving body, one end of the biasing member may be fitted in a concave section of the wedge member. With this structure, the biasing member can be provided in a small space.

In the moving body, the first nut may have a first engage section, and
the second nut may have a second engage section, which is engaged with the first engage section. With this structure, the nuts can be easily engaged each other by the simple structure.

Further, in a second aspect an actuating device of the present invention comprises:
a leadscrew having a screw section formed on an outer circumferential face thereof;
the moving body of the previous aspect of the present invention being screwed with the screw section of the leadscrew; and
a driving mechanism for rotating the leadscrew.

In the present invention, even if the force pressing the nuts onto the leadscrew is reduced and the clearances are formed between the nuts and the leadscrew, the clearances can be automatically eliminated, so that play or jolt of the moving body can be prevented. The clearances can be rapidly and smoothly eliminated. The structure of the moving body can be simple and compact. Further, manufacturing costs of the moving body and the actuating device can be reduced.

### BRIEF DESCRIPTION OF THE DRAWINGS

Embodiments of the present invention will now be described by way of examples and with reference to the accompanying drawings, in which:
Fig. 1 is a longitudinal sectional view of a leadscrew type actuating device of an embodiment of the present invention;
Fig. 2 is a longitudinal sectional view of the actuating device, in which a wedge member is moved from a position shown in Fig. 1;
Fig. 3 is a transverse sectional view of the actuating device;
Fig. 4A is a perspective view of a first nut;
Fig. 4B is a perspective view of a second nut; and
Fig. 5 is a longitudinal sectional view of the conventional actuating device.

### DETAILED DESCRIPTION OF THE EMBODIMENTS

Preferred embodiments of the present invention will now be described in detail with reference to the accompanying drawings.

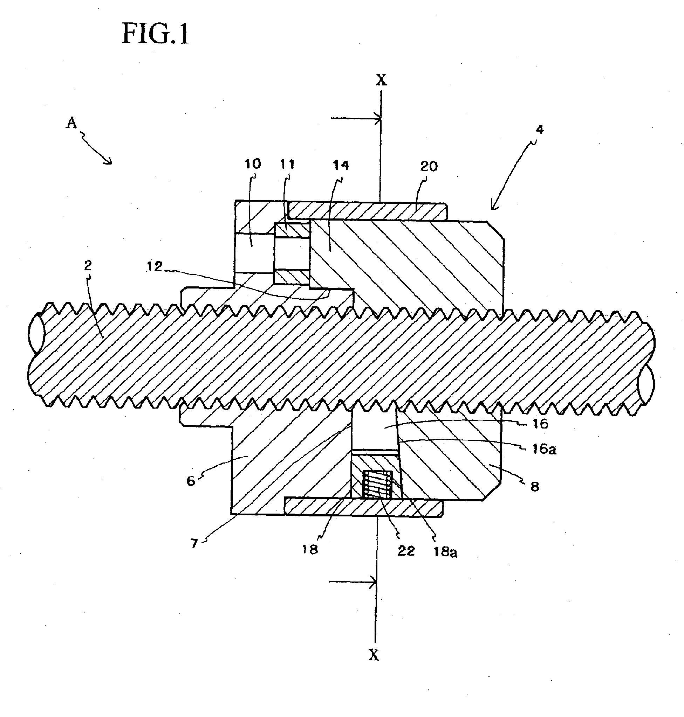

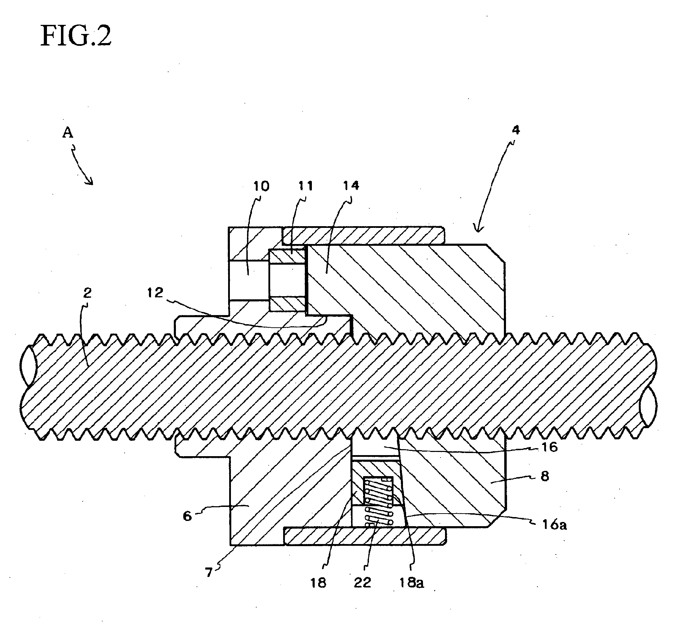

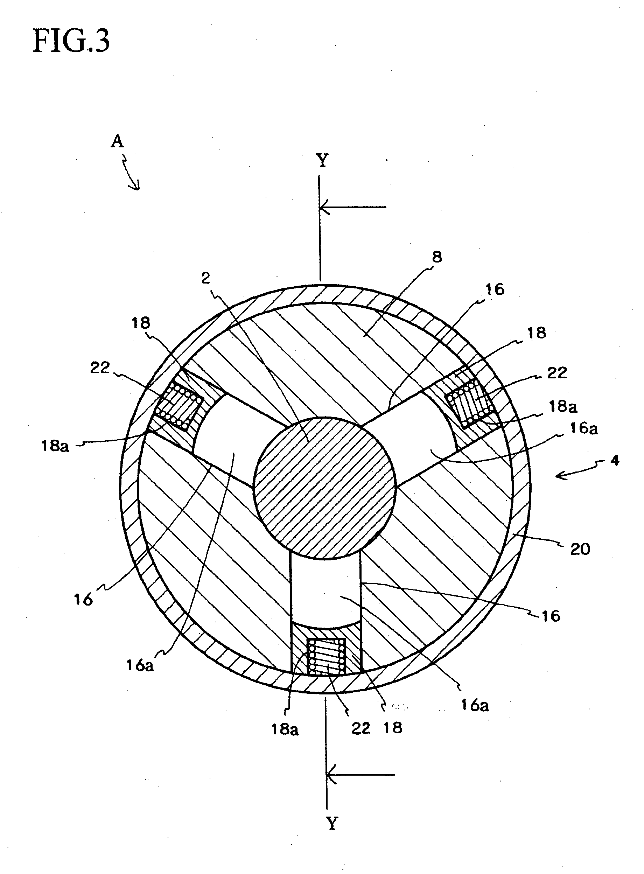

A leadscrew type actuating device of the present embodiment is shown in Figs. 1-3. Longitudinal sectional views of the actuating device A are shown in Figs. 1 and 2. Fig. 3 is the sectional view taken along a line X-X shown in Fig. 1; Fig. 1 is the sectional view taken along a line Y-Y shown in Fig. 3.

As shown in Fig. 1, a male screw section is formed on an outer circumferential face of a lead screw 2, which is rotated by a driving unit (not shown). A moving body 4 is linearly reciprocally moved along the leadscrew 2. The moving body 4 includes a first nut 6 and a second nut 8, which are screwed with the male screw section of the leadscrew 2 and engaged each other. With this structure, the moving body 4 is moved on the leadscrew 2 by rotating the leadscrew 2.

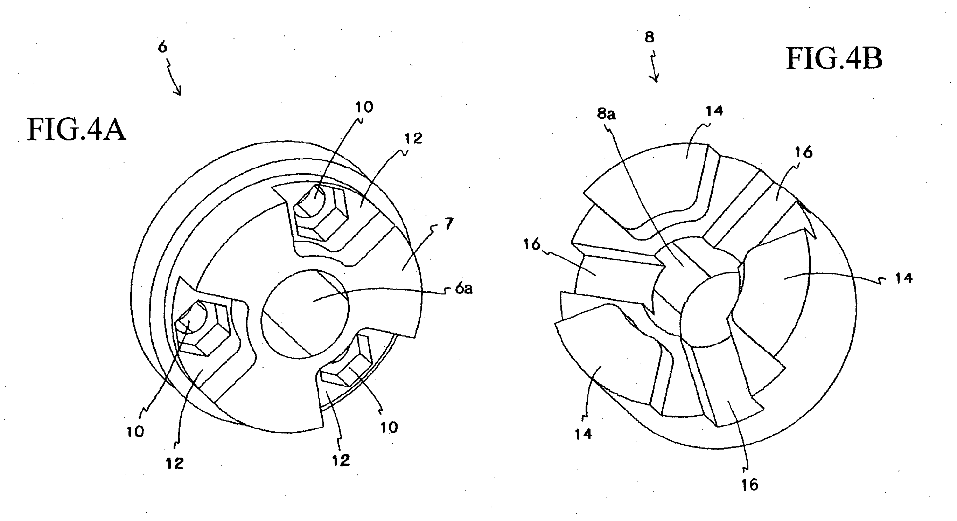

Fig. 4A is a perspective view of the first nut 6, and Fig. 4B is a perspective view of the second nut 8. Note that, female screw sections (not shown), which are capable of screwing with the male screw section of the leadscrew 2, are respectively formed on inner circumferential faces of the first and second nuts 6 and 8.

As shown in Figs. 1, 4A and 4B, a through-hole 11, in which an attachment nut 10 is fitted, is formed in the first nut 6. A member to be moved (not shown), e.g., tool, can be attached to the attachment nut 10. The member can be linearly moved along the leadscrew 2 together with the moving body 4.

As shown in Fig. 4A, concave parts 12 are formed in a side face 7 of the first nut 6, which faces the second nut 8. In the present embodiment, a plurality of the concave parts 12, e.g., three concave parts, are formed in the side face 7 and arranged in the circumferential direction of the nut 6 at regular separations. On the other hand, as shown in Fig. 4B, a plurality of projections 14, e.g., three projections, which are capable of respectively fitting into the concave parts 12, are formed in the second nut 8.

As shown in Fig. 1, the projections 14 of the second nut 8 are respectively fitted in the concave parts 12 of the first nut 6. With this structure, the first and second nuts 6 and 8 are mutually engaged. The nuts 6 and 8 are prohibited to rotate in the circumferential direction of the leadscrew 2, but allowed to move in the axial direction thereof. Further, they are capable of moving close and away each other.

As shown in Figs. 1 and 3, the moving body 4 includes a cylindrical member 20, which covers outer circumferential faces of the first and second nuts 6 and 8. One end of the cylindrical member 20 is fixed to the first nut 6; the other end is not fixed to the second nut 8. Therefore, the nut 8 is capable of moving in the axial direction with respect to the cylindrical member 20.

As shown in Fig. 4B, grooves 16 are formed in a side face of the second nut 8, which faces the first nut 6. Each groove 16 is formed between the adjacent projections 14. The grooves 16 are radially extended with respect to a center of the second nut 8. In Fig. 1, an inner bottom face 16a of each groove 16, which faces the side face 7 of the first nut 6, is a slope face. A distance between the inner bottom face 16a and the side face 7 is gradually reduced toward the leadscrew 2.

As shown in Figs. 1 and 3, wedge members 18 are respectively provided in the grooves 16. A side face of the wedge member 18, which faces the inner bottom face 16a of the groove 16, is a slope face corresponding to the inner bottom face 16a.

A concave section 18a is formed in an outer end face of each wedge member 18, which faces an inner circumferential face of the cylindrical member 20. A spring 22 is elastically provided between an inner bottom face of each concave section 18a and the inner circumferential face of the cylindrical member 20. With this structure, the wedge members 18 are always biased toward the leadscrew 2 by the springs 22.

As described above, the distance between the side face 7 of the first nut 6 and the inner bottom face 16a of each groove 16 of the second nut 8 is gradually reduced toward the leadscrew 2. Therefore, the elasticity of the springs 22 bias the wedge members 18 to increase said distances. The elasticity of the springs 22 press the first and second nuts 6 and 8 onto the leadscrew 2 as pressing forces.

In the leadscrew type actuating device A having the moving body 4, the first and second nuts 6 and 8 are always biased to move away each other by the springs 22 and the wedge members 18, so that the first and second nuts 6 and 8 are pressed onto the leadscrew 2. When clearances are formed between the leadscrew 2 and the first and second nuts 6 and 8, a clamping force of the nuts 6 and 8, which clamps the wedge members 18, is reduced. Then, the wedge members 18 are moved in the biasing directions of the springs 22, so that the distance between the nuts 6 and 8 are increased by the wedge members 18 and the clearances are automatically eliminated (see Fig. 2).

Even if a great external force is applied to the first and second nuts 6 and 8, frictions between the nuts 6 and 8 and the wedge members 18 is great so that the wedge members 18 is not moved in reverse directions, which are opposite to the biasing directions of the springs 22. Therefore, no clearances are formed between the leadscrew 2 and the nuts 6 and 8.

The springs 22 are provided to move only the wedge members 18 in the biasing directions when clearances are formed between the wedge members 18 and the nuts 6 and 8. Therefore, the springs 22 need no great elasticity. Therefore, clearances between the leadscrew 2 and the nuts 6 and 8 can be eliminated without increasing the pressing forces, and required torque for rotating the leadscrew 2 can be reduced.

Since the first and second nuts 6 and 8 are move away each other by merely moving the wedge members 18 in the biasing directions, dynamic resistance of moving the nuts 6 and 8 is much smaller than that of the conventional actuating device, in which the distance between the nuts are increased by turning the screw spacer. Therefore, even if the pressing forces are reduced or clearances are formed between the leadscrew 2 and the nuts 6 and 8, the distance between the nuts 6 and 8 can be rapidly and smoothly increased so that the pressing forces can be maintained and the clearances can be automatically eliminated.

In the above described embodiment, the inner bottom faces 16a of the grooves 16 are slope faces, and the distance between the first and second nuts 6 and 8 is increased by moving the wedge members 18 in the biasing directions of the springs 22. Means for increasing the distance between the nuts 6 and 8 is not limited to the embodiment. For example, if the side face 7 of the first nut 6 and the inner bottom faces 16a of the second nut 7 are formed parallel, the distance between the nuts 6 and 8 can be increased by taper-shaped wedge members 18, whose widths are gradually reduced toward the leadscrew 2. In this case, outer ends of the taper-shaped wedge members 18 are slightly projected outward from the outer circumferential faces of the nuts 6 and 8. The taper-shaped wedge members 18 are moved toward the leadscrew 2 by biasing members so as to increase the distance between the nuts 6 and 8.

Further, means for holding the biasing members, e.g., springs 22, is not limited to the cylindrical member 20. For example, the holding member may be extended sections, which are extended from the outer circumferential face of the first nut 6 toward the outer circumferential face of the second nut 8.

The moving body 4 of the present invention can be applied to many leadscrew type actuating devices.

The invention may be embodied in other specific forms. The present embodiments are therefore to be considered in all respects as illustrative and not restrictive.

## Claims

1. A moving body (4) of an actuating device (A) having a leadscrew (2),
comprising:
a first nut (6) being screwed with a screw section of the leadscrew (2), said first nut (6) being prohibited to rotate on the leadscrew (2) but allowed to move in the axial direction of the leadscrew (2);
a second nut (8) being screwed with the screw section of the leadscrew (2) and engaged with said first nut (6), said second nut (8) being prohibited to rotate on the leadscrew (2) but allowed to move in the axial direction of the leadscrew (2), said second nut (8) being capable of relatively moving to and away from said first nut (6);
a wedge member (18) being provided between said first nut (6) and said second nut (8); and
a biasing member (22) biasing said wedge member (18) in a biasing direction so as to increase a distance between said first nut (6) and said second nut (8),
whereby said first nut (6) and said second nut (8) are pressed onto the leadscrew (2) by increasing the distance between said first nut (6) and said second nut (8) with said wedge member (18).

2. The moving body (4) according to claim 1,
wherein a distance between contact faces of said first nut (6) and second nut (8), which contact said wedge member (18), is gradually reduced in the biasing direction of said biasing member (22), and
the distance between said first nut (6) and second nut (8) is increased by moving said wedge member (18), which contact the contact faces, in the biasing direction.

3. The moving body (4) according to claim 1 or 2,
wherein a width of said wedge member (18) is gradually reduced toward a front end or in the biasing direction.

4. The moving body (4) according to any one of the previous claims,
wherein said wedge member (18) is biased from outer faces of said first and second nuts (6, 8) toward inner faces thereof.

5. The moving body (4) according to any one of the previous claims,
wherein a plurality of said wedge members (18) are radially arranged with respect to an axial line of said first and second nuts (6, 8).

6. The moving body (4) according to any one of the previous claims,
further comprising a holding member (20) being provided to at least one of said nuts (6, 8),
wherein said biasing member (22) is elastically held between said wedge member (18) and said holding member (20).

7. The moving body (4) according to claim 6,
wherein said holding member is a cylindrical member (20) covering outer circumferential faces of said first and second nuts (6, 8).

8. The moving body (4) according to claim 6 or 7,
wherein one end of said biasing member (22) is fitted in a concave section (18a) of said wedge member (18).

9. The moving body (4) according to any one of the previous claims,
wherein said first nut (6) has a first engage section (12), and
said second nut (8) has a second engage section (14), which is engaged with the first engage section (12).

10. An actuating device (A),
comprising:
a leadscrew (2) having a screw section formed on an outer circumferential face thereof;
a moving body (4) being screwed with the screw section of said leadscrew (2); and
a driving mechanism for rotating said leadscrew (2),
wherein said moving body (4) is **characterized by**:
a first nut (6) being screwed with a screw section of the leadscrew (2), said first nut (6) being prohibited to rotate on the leadscrew (2) but allowed to move in the axial direction of the leadscrew (2);
a second nut (8) being screwed with the screw section of the leadscrew (2) and engaged with said first nut (6), said second nut (8) being prohibited to rotate on the leadscrew (2) but allowed to move in the axial direction of the leadscrew (2), said second nut (8) being capable of relatively moving to and away from said first nut (6);
a wedge member (18) being provided between said first nut (6) and said second nut (8); and
a biasing member (22) biasing said wedge member (18) in a biasing direction so as to increase a distance between said first nut (6) and said second nut (8),
whereby said first nut (6) and said second nut (8) are pressed onto the leadscrew (2) by increasing the distance between said first nut (6) and said second nut (8) with said wedge member (18).
